# EUROPEAN PATENT APPLICATION

(11) **EP 4 821 631 A1**
(43) Date of publication of application: **14.10.2026**
(21) Application number: 24900445.8
(22) Date of filing: 21.11.2024
(51) Int. Cl.: B23K 35/14, B23K 35/26, C22C 13/00, C22C 19/03

(54) **PREFORM SOLDER, METHOD FOR MANUFACTURING SAME, AND METHOD FOR MANUFACTURING SOLDER JOINT**

(30) Priority: 07.12.2023 JP 2023207004
(71) Applicant: Senju Metal Industry Co., Ltd., Tokyo 120-8555 (JP)
(72) Inventor: KIKUCHI, Shinji, Tokyo 120-8555 (JP); SASAKI, Tomoki, Tokyo 120-8555 (JP); TACHIBANA, Yoshie, Tokyo 120-8555 (JP)
(74) Representative: Lavoix
(86) International application number: PCT/JP2024/041303
(87) International publication number: WO 2025/121150

(57) **Abstract**

Provided are a preform solder, a method of manufacturing the same, and a method of manufacturing a solder joint, in which thermal conductive properties of a solder joint are improved. A preform solder that contains a first metal containing Sn, a second metal composed of an alloy containing Ni and Fe, and a third metal of which an entire surface is formed of a metal containing Ni is adopted. Alternatively, a preform solder 1 is adopted, which has a metal structure including a first phase (10) that is a continuous phase, a second phase (20) dispersed in the first phase (10), and a third phase (30) dispersed in the first phase, in which the first phase (10) contains Sn, the second phase (20) is composed of an alloy containing Ni and Fe, and the third phase (30) is composed of a metal of which an entire surface is formed of a metal containing Ni.

## Description

### TECHNICAL FIELD

The present invention relates to a preform solder, a method of manufacturing the same, and a method of manufacturing a solder joint. Priority is claimed on Japanese Patent Application No. 2023-207004, filed December 7, 2023, the content of which is incorporated herein by reference.

### BACKGROUND ART

In recent years, with an increase in temperature of an operating environment of a power semiconductor element using silicon carbide (SiC) or the like, a portion of a solder joint may reach about 250°C to 280°C. Therefore, a high-temperature solder that does not melt during operation under such high-temperature conditions is required.

In the production of such a high-temperature solder joint, a joining method using a preform solder as a soldering material is used. The preform solder is a molded product obtained by processing solder into various shapes such as a square shape, a ribbon shape, and a disk shape.

As such a preform solder, for example, a preform solder obtained by pressure-molding a mixed powder of metal powder of Sn and metal powder composed of an alloy of Ni and Fe has been proposed (see Patent Document 1).

### Citation List

### Patent Document

Patent Document 1: Japanese Patent No. 7014991

### SUMMARY OF INVENTION

### Technical Problem

In order to guarantee the operation of the power semiconductor element, it is required to improve heat dissipation from the power semiconductor element by improving thermal conductive properties of a solder joint portion.

On the other hand, in the preform solder as described in Patent Document 1, it is necessary to further improve the thermal conductive properties of the solder joint portion.

The present invention has been made in view of the above circumstances, and an object of the present invention is to provide a preform solder, a method of manufacturing the same, and a method of manufacturing a solder joint, in which thermal conductive properties of a solder joint are improved.

### Solution to Problem

The present invention includes the following aspects.
[1] A preform solder including: a first metal containing Sn; a second metal composed of an alloy containing Ni and Fe; and a third metal of which an entire surface is formed of a metal containing Ni, in which a melting point of the first metal is 300°C or lower, a melting point of the alloy in the second metal is higher than 300°C, a melting point of the metal containing Ni and forming the entire surface of the third metal is higher than 300°C, a content of Sn in the first metal is 20 mass% or more and 100 mass% or less with respect to a total mass of the first metal, a content of Ni in the second metal is 80 mass% or more and 99 mass% or less with respect to a total mass of the second metal, a content of Fe in the second metal is 1 mass% or more and 20 mass% or less with respect to the total mass of the second metal, a content of Ni in the metal containing Ni and forming the entire surface of the third metal is 50 mass% or more and 100 mass% or less with respect to a total mass of the metal forming the entire surface of the third metal, a particle size of the second metal is 0.1 to 1,000 µm, a particle size of the third metal is 0.1 to 1,000 µm, a content of the second metal is 1 to 70 mass% with respect to a total content of the first metal, the second metal, and the third metal, and a content of the third metal is 1 to 70 mass% with respect to the total content of the first metal, the second metal, and the third metal.
[2] The preform solder according to [1], in which a composition of the third metal is different from a composition of the first metal and a composition of the second metal, the third metal consists of Ni or contains Ni and a metal other than Ni, a content of Ni in the third metal is 50 mass% or more with respect to a total mass of the third metal, a melting point of the third metal is higher than 300°C, a content of the first metal is 20 to 90 mass% with respect to the total content of the first metal, the second metal, and the third metal, and the content of the third metal is 5 to 30 mass% with respect to the total content of the first metal, the second metal, and the third metal.
[3] The preform solder according to [1], in which
   the third metal has a structure composed of a core portion and a surface layer covering the core portion,
   a composition of a metal forming the surface layer of the third metal is different from a composition of the first metal and a composition of the second metal,
   the metal forming the surface layer of the third metal consists of Ni or contains Ni and a metal other than Ni,
   a content of Ni in the metal forming the surface layer of the third metal is 50 mass% or more with respect to a total mass of the metal forming the surface layer of the third metal,
   a melting point of the metal forming the surface layer of the third metal is higher than 300°C,
   a content of the first metal is 20 to 90 mass% with respect to the total content of the first metal, the second metal, and the third metal, and
   the content of the third metal is 5 to 30 mass% with respect to the total content of the first metal, the second metal, and the third metal.
[4] The preform solder according to [3], further including: an intermediate layer between the core portion and the surface layer covering the core portion.
[5] The preform solder according to any one of [1] to [4], further including: a fourth metal containing Sn and covering the third metal.
[6] A preform solder having a metal structure including a first phase that is a continuous phase, a second phase dispersed in the first phase, and a third phase dispersed in the first phase, the first phase is composed of a metal containing Sn, the second phase is composed of an alloy containing Ni and Fe, the third phase has an entire surface composed of a metal containing Ni, an overall melting point of the metal that composes the first phase is 300°C or lower, an overall melting point of the alloy that composes the second phase is higher than 300°C, an overall melting point of the metal that contains Ni and composes the entire surface of the third phase is higher than 300°C, a content of Sn in the metal that composes the first phase is 20 mass% or more and 100 mass% or less with respect to a total mass of the metal, a content of Ni in the alloy that composes the second phase is 80 mass% or more and 99 mass% or less with respect to a total mass of the alloy, a content of Fe in the alloy that composes the second phase is 1 mass% or more and 20 mass% or less with respect to the total mass of the alloy, a content of Ni in the metal containing Ni and forming the entire surface of the third phase is 50 mass% or more and 100 mass% or less with respect to a total mass of the metal forming the entire surface of the third phase, a particle size of the second phase is 0.1 to 1,000 µm, a particle size of the third phase is 0.1 to 1,000 µm, a content of an entirety of the alloy that composes the second phase is 1 to 70 mass% with respect to a total content of an entirety of the metal that composes the first phase, the entirety of the alloy that composes the second phase, and an entirety of the metal that composes the third phase, and a content of the entirety of the metal that composes the third phase is 1 to 70 mass% with respect to the total content of the entirety of the metal that composes the first phase, the entirety of the alloy that composes the second phase, and the entirety of the metal that composes the third phase.
[7] The preform solder according to [6], in which an overall composition of the metal that composes the third phase is different from an overall composition of the metal that composes the first phase and an overall composition of the alloy that composes the second phase, the third phase consists of Ni or contains Ni and a metal other than Ni, the content of Ni in the metal that composes the third phase is 50 mass% or more with respect to the total mass of the metal that composes the third phase, an overall melting point of the metal that composes the third phase is higher than 300°C, a content of the entirety of the metal that composes the first phase is 20 to 90 mass% with respect to the total content of the entirety of the metal that composes the first phase, the entirety of the alloy that composes the second phase, and the entirety of the metal that composes the third phase, and the content of the entirety of the metal that composes the third phase is 5 to 30 mass% with respect to the total content of the entirety of the metal that composes the first phase, the entirety of the alloy that composes the second phase, and the entirety of the metal that composes the third phase.
[8] The preform solder according to [6], in which the third phase has a structure composed of a core portion and a surface layer covering the core portion, an overall composition of a metal forming the surface layer of the third phase is different from an overall composition of the metal that composes the first phase and an overall composition of the alloy that composes the second phase, the surface layer of the third phase consists of Ni or contains Ni and a metal other than Ni, a content of Ni in the surface layer of the third phase is 50 mass% or more with respect to a total mass of the surface layer of the third phase, an overall melting point of the metal forming the surface layer of the third phase is higher than 300°C, a content of the entirety of the metal that composes the first phase is 20 to 90 mass% with respect to the total content of the entirety of the metal that composes the first phase, the entirety of the alloy that composes the second phase, and the entirety of the metal that composes the third phase, and the content of the entirety of the metal that composes the third phase is 5 to 30 mass% with respect to the total content of the entirety of the metal that composes the first phase, the entirety of the alloy that composes the second phase, and the entirety of the metal that composes the third phase.
[9] The preform solder according to [8], further including: an intermediate layer between the core portion and the surface layer covering the core portion.
[10] The preform solder according to any one of [6] to [9], further including: a fourth phase containing Sn and covering the third phase.
[11] A method of manufacturing a preform solder, including: a mixing step of a first metal powder containing Sn, a second metal powder composed of an alloy containing Ni and Fe, and a third metal powder of which an entire surface is formed of a metal containing Ni to prepare a metal powder mixture; and a rolling step of the metal powder mixture to produce a preform solder, in which a melting point of the first metal powder is 300°C or lower, a melting point of the alloy in the second metal powder is higher than 300°C, a melting point of the metal containing Ni and forming the entire surface of the third metal powder is higher than 300°C, a content of Sn in the first metal powder is 20 mass% or more and 100 mass% or less with respect to a total mass of the first metal powder, a content of Ni in the second metal powder is 80 mass% or more and 99 mass% or less with respect to a total mass of the second metal powder, a content of Fe in the second metal powder is 1 mass% or more and 20 mass% or less with respect to the total mass of the second metal powder, a content of Ni in the metal containing Ni and forming the entire surface of the third metal powder is 50 mass% or more and 100 mass% or less with respect to a total mass of the metal forming the entire surface of the third metal, a particle size of the first metal powder is 0.1 to 1,000 µm, a particle size of the second metal powder is 0.1 to 1,000 µm, a particle size of the third metal powder is 0.1 to 1,000 µm, and in the mixing step, the first metal powder, the second metal powder, and the third metal powder are mixed in a ratio of 20 to 95 parts by mass of the first metal powder, 1 to 70 parts by mass of the second metal powder, and 1 to 70 parts by mass of the third metal powder.
[12] The method of manufacturing a preform solder according to [11], in which a composition of the third metal powder is different from a composition of the first metal powder and a composition of the second metal powder, the third metal powder consists of Ni or contains Ni and a metal other than Ni, a content of Ni in the third metal powder is 50 mass% or more with respect to a total mass of the third metal powder, a melting point of the third metal is higher than 300°C, and in the mixing step, the first metal powder, the second metal powder, and the third metal powder are mixed in a ratio of 20 to 90 parts by mass of the first metal powder, 1 to 70 parts by mass of the second metal powder, and 5 to 30 parts by mass of the third metal powder.
[13] The method of manufacturing a preform solder according to [11],
   in which the third metal powder has a structure composed of a core portion and a surface layer covering the core portion,
   a composition of a metal forming the surface layer of the third metal powder is different from a composition of the first metal powder and a composition of the second metal powder, the metal forming the surface layer of the third metal powder consists of Ni or contains Ni and a metal other than Ni, a content of Ni in the metal forming the surface layer of the third metal powder is 50 mass% or more with respect to a total mass of the metal forming the surface layer of the third metal powder, a melting point of the metal forming the surface layer of the third metal powder is higher than 300°C, and in the mixing step, the first metal powder, the second metal powder, and the third metal powder are mixed in a ratio of 20 to 90 parts by mass of the first metal powder, 1 to 70 parts by mass of the second metal powder, and 5 to 30 parts by mass of the third metal powder.
[14] The method of manufacturing a preform solder according to [13], in which the third metal powder has an intermediate layer between the core portion and the surface layer covering the core portion.
[15] The method of manufacturing preform solder according to [11] to [14], further including: covering the third metal powder with a fourth metal.
[16] A method of manufacturing a solder joint, including: forming a joint portion between objects using the preform solder manufactured by the method of manufacturing a preform solder according to any one of [11] to [14].
[17] A method of manufacturing a solder joint, including: forming a joint portion between objects using the preform solder manufactured by the method of manufacturing a preform solder according to [15].

### Advantageous Effects of Invention

According to the present invention, it is possible to provide a preform solder, a method of manufacturing the same, and a method of manufacturing a solder joint, in which thermal conductive properties of a solder joint are improved.

### BRIEF DESCRIPTION OF DRAWINGS

[FIG. 1] A perspective view showing an embodiment of a preform solder.
[FIG. 2] A schematic view showing a cross section in a thickness direction in the embodiment of the preform solder.
[FIG. 3] A schematic view showing a cross section of a third metal 30A in the embodiment of the preform solder.
[FIG. 4] A schematic view showing a cross section of a third metal 30B in the embodiment of the preform solder.
[FIG. 5] A SEM image showing a cross section in a thickness direction in preform solders of Example 1 and Comparative Example 1.

### DESCRIPTION OF EMBODIMENTS

In the present specification, "include" and "contain" are concepts that encompass "comprise," "consist essentially of," and "consist of".

In the present specification, a "first metal", a "second metal", a "third metal", a "fourth metal", and a "fifth metal" may respectively mean "particles formed of the first metal", "particles formed of the second metal", "particles formed of the third metal", "particles formed of the fourth metal", and "particles formed of the fifth metal".

In the present specification, a "first metal powder", a "second metal powder", a "third metal powder", a "fourth metal powder", and a "fifth metal powder" may respectively mean a "particle group formed of the first metal", a "particle group formed of the second metal", a "particle group formed of the third metal", a "particle group formed of the fourth metal", and a "particle group formed of the fifth metal".

### <Preform Solder: First Embodiment>

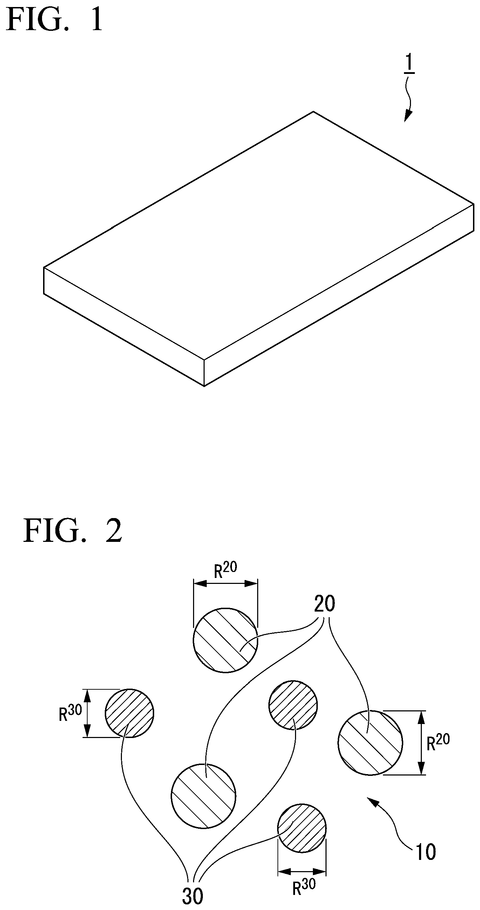

FIG. 1 is an embodiment of a preform solder according to the present invention. A preform solder 1 has a square shape, and contains a first metal containing Sn, a second metal composed of an alloy containing Ni and Fe, and a third metal of which an entire surface is formed of a metal containing Ni. The preform solder 1 further contains the third metal of which the entire surface is formed of the metal containing Ni.

### <First Metal>

The first metal contains Sn.

Since Sn has excellent ductility, the first metal containing Sn can eliminate voids between the first metals by plastic deformation. In addition, the first metal containing Sn can ensure general performance such as wettability as a soldering material.

The first metal may contain a metal other than Sn.

Examples of the metal other than Sn, which may be contained in the first metal, include Ag, Cu, In, Bi, Ni, Ge, P, Co, Ga, Zn, Sb, Pb, Au, Al, Pt, Pd, Fe, Mn, and Zr. These metals other than Sn may include one kind or two or more kinds. A metal group other than Sn can be optionally selected from these metals.

The metal which may be contained in the first metal may be Sn alone or a metal other than Sn, or may be an alloy of Sn and two or more kinds of metals other than Sn.

The first metal may be, for example, Sn, may be a mixture of a metal other than Sn and Sn, may be an alloy of a metal other than Sn and Sn, or may be a mixture of an alloy containing Sn and another metal.

The first metal may contain unavoidable impurities in addition to the above-described metal. The effect of the present invention is not affected even in a case where unavoidable impurities are contained. The first metal may be one kind or two or more kinds.

A melting point of the first metal is preferably 300°C or lower, may be 250°C or lower, or may be 116°C to 200°C.

In a case where the melting point of the first metal is equal to or lower than the upper limit of the above-described preferred range, the wettability of the solder is easily secured.

A "melting point of a metal to be measured or a melting point of a metal powder to be measured" in the present specification refers to a melting point measured by differential scanning calorimetry (DSC). The melting point of the metal to be measured means a temperature at which the amount of heat absorbed per unit time is highest, based on the result of the DSC measurement for the metal to be measured. In a case where the metal to be measured has one peak in the measurement by DSC, the melting point of the metal to be measured means the temperature at the top of the peak. In a case where the metal to be measured has a plurality of peaks in the measurement by DSC, the melting point of the metal to be measured means a temperature of a peak top having the highest amount of heat absorbed per unit time among the plurality of peak tops.

That is, in a case where the metal to be measured contains a plurality of kinds of metals, the temperature of the peak top at which the amount of heat absorbed per unit time is highest among the plurality of peak tops that the metal to be measured can have is adopted as the melting point of the metal to be measured.

The same applies to the melting point of the metal powder to be measured.

Melting points of the first metal and the fourth metal can be measured using, for example, DSC7020 manufactured by Hitachi High-Tech Science Corporation. Melting points of the second metal and the third metal can be measured, for example, using DSC 404-F3 Pegasus manufactured by NETZSCH.

A content of Sn in the first metal is preferably 20 mass% or more and 100 mass% or less with respect to a total mass of the first metal. In order for the characteristics of Sn to be sufficiently exhibited, the content of Sn in the first metal is preferably 90 mass% or more, more preferably 95 mass% or more, and still more preferably 100 mass% with respect to the total mass of the first metal.

### <Second Metal>

The second metal is composed of an alloy containing Ni and Fe.

The alloy in the second metal contains Ni and Fe, has a melting point higher than the melting point of the first metal, and is preferably dispersed in the preform solder.

The melting point of the alloy in the second metal is preferably higher than 300°C, more preferably 500°C or higher, and still more preferably 600°C to 1,600°C.

When the melting point of the alloy in the second metal is higher than the lower limit of the above-described preferred range, shear strength of a solder joint is easily increased even in a high-temperature operating environment.

The alloy in the second metal may contain a metal other than Ni and Fe. That is, the second metal may be an alloy of Ni and Fe, or an alloy of Ni, Fe, and a metal other than Ni and Fe, and is particularly preferably an alloy of Ni and Fe.

Examples of the metal other than Ni and Fe, which may be contained in the second metal, include Sn, Ag, Cu, In, Bi, Ge, P, Co, Ga, Zn, Sb, Pb, Au, Al, Pt, Pd, Mn, and Zr. These metals other than Ni and Fe may include one kind or two or more kinds. A metal group other than Ni and Fe can be optionally selected from these metals.

The second metal may contain unavoidable impurities in addition to the above-described metal. The effect of the present invention is not affected even in a case where unavoidable impurities are contained. The second metal may be one kind or two or more kinds.

A content of Ni in the second metal is preferably 80 mass% or more and 99 mass% or less, and more preferably 85 mass% or more and 95 mass% or less with respect to a total mass of the second metal.

A content of Fe in the second metal is preferably 1 mass% or more and 20 mass% or less, and more preferably 5 mass% or more and 15 mass% or less with respect to the total mass of the second metal.

When the contents of Ni and Fe in the second metal are in the above-described preferred ranges, an intermetallic compound is formed at an earlier stage, and the generation of voids can be suppressed.

A "particle size of a metal or a metal powder" mentioned in the present specification refers to an average particle size measured on a volume basis using a laser diffraction/scattering type particle size distribution analyzer.

The average particle size can be measured, for example, using a laser diffraction/scattering type particle size distribution analyzer (MT3300EXII) manufactured by MicrotracBEL Corp.

In a preform solder according to a first embodiment, a particle size of the second metal is preferably 0.1 to 1,000 µm, more preferably 1 to 100 µm, and still more preferably 5 to 50 µm.

When the particle size of the second metal is equal to or greater than the lower limit of the above-described preferred range, wettability is easily secured, and when the particle size of the second metal is equal to or less than the upper limit of the above-described preferred range, an intermetallic compound is more easily formed.

### <Third Metal>

The entire surface of the third metal is formed of a metal containing Ni. That is, in the third metal, Ni is exposed on the surface.

A content of Ni in the metal forming the entire surface of the third metal is 50 mass% or more and 100 mass% or less with respect to a total mass of the metal forming the entire surface of the third metal.

A melting point of the metal forming the entire surface of the third metal is higher than 300°C, preferably 500°C or higher, and more preferably 600°C to 1,600°C.

It is preferable that the third metal is dispersed in the preform solder.

The metal forming the entire surface of the third metal may consist of Ni or may contain a metal other than Ni.

Examples of the metal forming the entire surface of the third metal include Ni alone, an alloy of a metal other than Ni and Ni, and a mixture of an alloy containing Ni and another metal, and Ni alone is preferable.

Examples of the metal other than Ni in the alloy of the metal other than Ni and Ni include Ag, Cu, In, Bi, Ge, P, Co, Ga, Zn, Sb, Pb, Au, Al, Pt, Pd, Fe, Mn, Zr, and Sn. These metals other than Ni may include one kind or two or more kinds. A metal group other than Ni can be optionally selected from these metals.

The metal forming the entire surface of the third metal may include unavoidable impurities in addition to the above-described metal. The effect of the present invention is not affected even in a case where unavoidable impurities are contained.

The metal forming the entire surface of the third metal may be one kind or two or more kinds.

In a case where the metal forming the entire surface of the third metal is a metal containing Ni and a metal other than Ni, the content of Ni in the metal forming the entire surface is 50 mass% or more, preferably 70 mass% or more, more preferably 90 mass% or more, even more preferably 95 mass% or more, and particularly preferably 98 mass% or more with respect to the total mass of the metal forming the entire surface.

In a case where the metal forming the entire surface of the third metal contains Fe, a content of Fe in the metal forming the entire surface of the third metal is preferably 0 mass% or more and less than 5 mass% with respect to the total mass of the metal forming the entire surface of the third metal.

In the preform solder according to the first embodiment, a particle size of the third metal is preferably 0.1 to 1,000 µm, more preferably 1 to 300 µm, and even more preferably 10 to 200 µm.

In a case where the particle size of the third metal is equal to or greater than the lower limit of the above-described preferred range, thermal conductive properties of a solder joint portion are easily improved.

A specific structure of the third metal will be described below with examples.

As described in (1) below, an entirety of the third metal may have a uniform composition. Alternatively, as described in (2) below, the third metal may have a structure having a plurality of different compositions.

In a case where the entirety of the third metal has a uniform composition, as described in (1-1) below, the third metal may be a metal consisting of Ni, or as described in (1-2) below, the third metal may be a metal containing Ni and a metal other than Ni.

Alternatively, in a case where the third metal has a structure having a plurality of different compositions, the third metal may have a core portion and a surface layer as described in (2) below.

Hereinafter, these cases will be described.

### (1) Case where entirety of third metal has uniform composition

### (1-1) Case where the third metal consists of Ni

The composition of the third metal is different from a composition of the first metal and a composition of the second metal.

In this case, the content of Ni in the metal forming the entire surface of the third metal is 100 mass% with respect to the total mass of the metal forming the entire surface of the third metal. A ratio of Ni in the surface of the third metal is 100% with respect to an area (100%) of the entire surface of the third metal.

The third metal may contain unavoidable impurities in addition to Ni. The effect of the present invention is not affected even in a case where unavoidable impurities are contained.

### (1-2) Case where third metal contains Ni and metal other than Ni

The composition of the third metal is different from the compositions of the first metal and the second metal.

The third metal may be a mixture of a metal other than Ni and Ni, may be an alloy of a metal other than Ni and Ni, or may be a mixture of an alloy containing Ni and another metal.

Examples of the metal other than Ni, which may be contained in the third metal, include Ag, Cu, In, Bi, Ge, P, Co, Ga, Zn, Sb, Pb, Au, Al, Pt, Pd, Fe, Mn, Zr, and Sn. These metals other than Ni may include one kind or two or more kinds. A metal group other than Ni can be optionally selected from these metals.

The third metal may contain unavoidable impurities in addition to the above-described metal. The effect of the present invention is not affected even in a case where unavoidable impurities are contained.

The third metal in (1-2) may be one kind or two or more kinds.

In a case where the third metal is a metal containing Ni and a metal other than Ni, a content of Ni in the third metal is 50 mass% or more and 100 mass% or less, preferably 70 mass% or more, more preferably 90 mass% or more, even more preferably 95 mass% or more, and particularly preferably 98 mass% or more with respect to a total mass of the third metal.

In a case where the third metal includes Fe, a content of Fe in the third metal is preferably 0 mass% or more and less than 5 mass% with respect to the total mass of the third metal.

In the case of (1), the melting point of the third metal is higher than 300°C, preferably 500°C or higher, and more preferably 600°C to 1,600°C.

In the case of (1), the particle size of the third metal is preferably 0.1 to 1,000 µm, more preferably 1 to 300 µm, and even more preferably 10 to 200 µm.

### (2) Case where third metal has structure composed of core portion and surface layer covering core portion

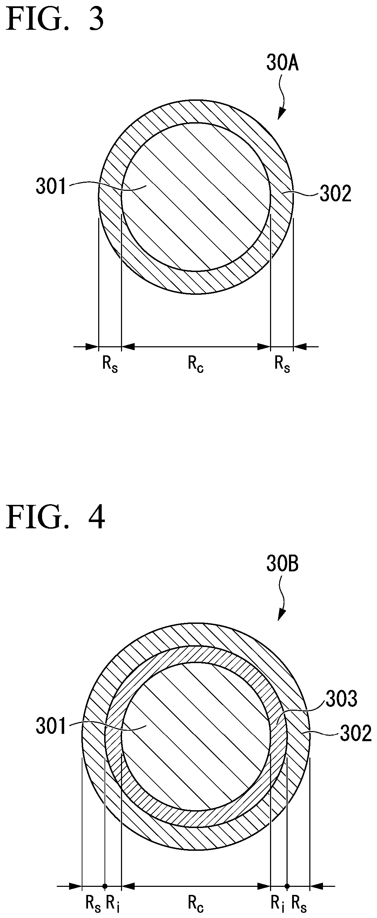

As illustrated in FIG. 3, a third metal 30A has a core portion 301 and a surface layer 302 covering the core portion 301. Rc means a diameter of the core portion 301. Rs means a thickness of the surface layer 302. The "surface layer covering the core portion" can also be rephrased as a "covering layer covering the core portion".

A composition of a metal forming the surface layer 302 is different from a composition of a metal forming the core portion 301. The composition of the third metal is different from the compositions of the first metal and the second metal.

The composition of the metal forming the surface layer of the third metal is different from the compositions of the first metal and the second metal.

### · Surface Layer

The metal forming the surface layer of the third metal may consist of Ni or may be a metal containing Ni and a metal other than Ni.

That is, the metal forming the surface layer of the third metal may be Ni alone or may be an alloy of a metal other than Ni and Ni.

It is preferable that the metal forming the surface layer of the third metal is Ni alone.

Examples of the metal other than Ni, which may be contained in the metal forming the surface layer of the third metal, include Ag, Cu, In, Bi, Ge, P, Co, Ga, Zn, Sb, Pb, Au, Al, Pt, Pd, Fe, Mn, Zr, and Sn. These metals other than Ni may include one kind or two or more kinds. A metal group other than Ni can be optionally selected from these metals.

The metal forming the surface layer of the third metal may contain unavoidable impurities in addition to the above-described metal. The effect of the present invention is not affected even in a case where unavoidable impurities are contained. The metal forming the surface layer of the third metal may be one kind or two or more kinds.

In a case where the metal forming the surface layer of the third metal is a metal containing Ni and a metal other than Ni, a content of Ni in the metal forming the surface layer of the third metal is 50 mass% or more and less than 100 mass%, preferably 70 mass% or more, more preferably 80 mass% or more, even more preferably 90 mass% or more, particularly preferably 95 mass% or more, and most preferably 98 mass% or more, with respect to a total mass of the metal forming the surface layer of the third metal.

In a case where the metal forming the surface layer of the third metal contains Fe, a content of Fe in the metal forming the surface layer of the third metal is preferably 0 mass% or more and less than 5 mass% with respect to the total mass of the metal forming the surface layer of the third metal.

At least a part of a surface of the core portion is covered with the surface layer. In FIG. 1, an entire surface of the core portion is covered with the surface layer.

A ratio of an area of the surface of the core portion covered with the surface layer with respect to a total surface area (100%) of the core portion is preferably 50% or more and 100% or less, more preferably 70% or more and 100% or less, even more preferably 90% or more and 100% or less, particularly preferably 95% or more and 100% or less, and most preferably 100%.

The thickness Rs of the surface layer of the third metal may be, for example, 0.01 µm or more and 100 µm or less. The thickness of the surface layer of the third metal may be 0.1 µm or more, 0.3 µm or more, 0.5 µm or more, 0.75 µm or more, 1 µm or more, or 2 µm or more. An average thickness of the surface layer of the third metal may be 50 µm or less, 30 µm or less, 10 µm or less, 5 µm or less, 3 µm or less, or 2 µm or less.

In the present specification, the thickness Rs of the surface layer of the third metal, the diameter Rc of the core portion of the third metal, a thickness Ri of an intermediate layer, and a thickness of a layer of fourth metal containing Sn can be measured from a cross-sectional structure of the third metal and the layer of the fourth metal containing Sn, using an optical microscope, a SEM, a transmission electron microscope (TEM), or the like.

The thickness Rs of the surface layer and the thickness Ri of the intermediate layer can each be obtained by measuring thicknesses in three or more cross sections and calculating an average value of the thicknesses.

The diameter Rc of the core portion can be obtained by measuring three or more diameters of the third metal and calculating an average value thereof.

Alternatively, the diameter Rc of the core portion of the third metal can be measured as follows. In a case of manufacturing the third metal powder, a particle size of a metal powder prepared for use as the core portion can be set as the diameter Rc.

The surface layer of the third metal may be a plating layer formed by a plating treatment.

Examples of a method of the plating treatment include known electroplating and electroless plating.

In the case of (2), a melting point of the metal forming the surface layer of the third metal is higher than 300°C, preferably 500°C or higher, and more preferably 600°C to 1,600°C.

### · Core Portion

The metal forming the core portion of the third metal may be one kind of metal, a mixture of two or more kinds of metals, an alloy formed of two or more metal elements, a mixture of alloys formed of two or more kinds of metal elements, or a mixture of an alloy formed of two or more kinds of metal elements and a metal alone.

Examples of the metal which may be contained in the core portion of the third metal include Ag, Cu, In, Bi, Ni, Ge, P, Co, Ga, Zn, Sb, Pb, Au, Al, Pt, Pd, Fe, Mn, Zr, and Sn. These metals may include one kind or two or more kinds. A metal group which may be contained in the core portion can be optionally selected from these metals.

The core portion of the third metal may contain unavoidable impurities in addition to the above-described metal. The effect of the present invention is not affected even in a case where unavoidable impurities are contained.

The metal forming the core portion of the third metal may be one kind or two or more kinds.

The diameter Rc of the core portion of the third metal is preferably 0.1 to 1,000 µm, more preferably 3 to 300 µm, even more preferably 5 to 200 µm, particularly preferably 20 to 200 µm, and most preferably 70 to 200 µm.

The diameter Rc may be 150 µm or less, 100 µm or less, 75 µm or less, 50 µm or less, 30 µm or less, 20 µm or less, 15 µm or less,

A ratio between Rc and Rs is a ratio represented by Rc/Rs, may be 0.1 to 1,000, 1 to 300, or 5 to 200.

The third metal 30A of (2) may be one kind or two or more kinds.

### (3) Other Forms

As illustrated in FIG. 4, a third metal 30B may have an intermediate layer 303 between the core portion 301 and the surface layer 302 covering the core portion 301. The surface layer 302 covers the core portion 301 with the intermediate layer 303 interposed therebetween. The intermediate layer 303 is adjacent to the core portion 301 and is also adjacent to the surface layer 302. Ri means the thickness of the intermediate layer 303. The intermediate layer 303 may cover a part of the core portion 301 or may cover an entirety of the core portion 301, and preferably covers the entirety of the core portion 301. The third metal 30B is the same as the third metal 30A except that the intermediate layer 303 is provided.

By providing the third metal 30B with the intermediate layer 303, it is easy to provide the surface layer 302 of the third metal 30B.

A composition of a metal forming the intermediate layer 303 is different from the metal forming the core portion 301 and the metal forming the surface layer 302.

The intermediate layer may be one layer or two or more layers.

The metal forming the intermediate layer may be one kind of metal or an alloy formed of two or more kinds of metal elements.

Examples of the metal which may be contained in the intermediate layer include Ag, Cu, In, Bi, Ni, Ge, P, Co, Ga, Zn, Sb, Pb, Au, Al, Pt, Pd, Fe, Mn, Zr, and Sn. These metals may include one kind or two or more kinds. A metal group which may be contained in the intermediate layer can be optionally selected from these metals.

The intermediate layer may contain unavoidable impurities in addition to the above-described metal. The effect of the present invention is not affected even in a case where unavoidable impurities are contained.

The metal forming the intermediate layer may be one kind or two or more kinds.

The thickness Ri of the intermediate layer may be, for example, 0.01 µm or more and 100 µm or less, 1 µm or more and 50 µm or less, or 2 µm or more and 10 µm or less.

The intermediate layer may be a plating formed by a plating treatment.

Examples of a method of the plating treatment include known electroplating and electroless plating.

Examples of the metal forming each of the core portion 301 and the surface layer 302 in the third metal 30B include the same metals as described above for the third metal 30A.

The third metal 30B of (3) may be one kind or two or more kinds.

### <Fourth Metal Containing Sn>

The preform solder according to the present embodiment may further contain the fourth metal containing Sn, which covers the third metal. The fourth metal may cover a part of the third metal or may cover the entirety of the third metal, and preferably covers the entirety of the third metal.

The third metal may be covered with a layer formed of the fourth metal. In this case, the layer of the fourth metal covering the third metal may be one layer or two or more layers.

The fourth metal may contain a metal other than Sn. That is, the fourth metal may be Sn alone, may be a mixture of a metal other than Sn and Sn, may be an alloy of a metal other than Sn and Sn, or may be a mixture of an alloy containing Sn and another metal. It is preferable that the fourth metal is Sn alone.

Examples of the metal other than Sn, which may be contained in the fourth metal, include Ag, Cu, In, Bi, Ni, Ge, P, Co, Ga, Zn, Sb, Pb, Au, Al, Pt, Pd, Fe, Mn, and Zr. The metal other than Sn may include one kind or two or more kinds. A metal group other than Sn can be optionally selected from these metals.

The fourth metal may contain unavoidable impurities in addition to the above-described metal. The effect of the present invention is not affected even in a case where unavoidable impurities are contained.

The metal forming the fourth metal may be one kind or two or more kinds.

In a case where the fourth metal is a metal containing Sn and a metal other than Sn, a content of Sn in the fourth metal is preferably 20 mass% or more and 100 mass% or less, more preferably 90 mass% or more, even more preferably 95 mass% or more, and particularly preferably 100 mass% with respect to a total mass of the fourth metal.

An average thickness of the layer of the fourth metal may be, for example, 0.01 µm or more and 100 µm or less, 1 µm or more and 50 µm or less, or 2 µm or more and 10 µm or less.

The layer of the fourth metal may be a plating layer formed by a plating treatment. Examples of a method of the plating treatment include known electroplating and electroless plating.

The melting point of the fourth metal is preferably 300°C or lower, may be 250°C or lower, or may be 116°C to 200°C.

When the melting point of the fourth metal is equal to or lower than the upper limit of the above-described preferred range, the wettability is improved during melting of the preform solder, and furthermore, a reduction in voids can be expected.

When the fourth metal contains Sn, wettability is improved during the melting of the preform solder, and furthermore, a reduction in voids can be expected. The metal layer is melted after the start of heating for melting the preform solder, and thus the surface layer of the third metal is exposed, which does not impair the effects of the present application.

### <Relationship between Contents of First Metal, Second Metal, and Third Metal>

In the preform solder according to the first embodiment, regarding a mixing ratio between the first metal, the second metal, and the third metal, a content of the first metal is preferably 20 to 95 mass%, more preferably 20 to 90 mass%, still more preferably 40 to 90 mass%, particularly preferably 50 to 85 mass%, and most preferably 60 to 75 mass% with respect to a total content of the first metal, the second metal, and the third metal.

In the preform solder according to the first embodiment, regarding the mixing ratio between the first metal, the second metal, and the third metal, from the viewpoint of achieving both joining properties and shear strength, a content of the second metal is preferably 1 to 70 mass%, more preferably 3 to 50 mass%, still more preferably 5 to 40 mass%, particularly preferably 5 to 30 mass%, and most preferably 5 to 25 mass% with respect to the total content of the first metal, the second metal, and the third metal.

In a case where the content of the second metal is equal to or more than the lower limit of the above-described preferred range, the generation of voids during melting of Sn is easily suppressed. In addition, heat resistance of the solder joint portion is further improved. When the content is equal to or less than the upper limit of the above-described preferred range, the generation of voids is suppressed by suppressing the generation of a porous structure due to the formation of an intermetallic compound, and the shear strength is likely to be maintained. In particular, the generation of the fine voids inside the solder joint portion is easily suppressed.

In the preform solder according to the first embodiment, regarding the mixing ratio between the first metal, the second metal, and the third metal, a content of the third metal is preferably 1 to 70 mass%, more preferably 3 to 50 mass%, still more preferably 5 to 40 mass%, particularly preferably 5 to 30 mass%, and most preferably 20 to 30 mass% with respect to the total content of the first metal, the second metal, and the third metal.

When the content of the third metal is equal to or more than the lower limit of the above-described preferred range, thermal conductive properties of the solder joint portion are easily improved, and when the content of the third metal is equal to or less than the upper limit of the above-described preferred range, the generation of voids is suppressed.

In the preform solder according to the first embodiment, a sum of the content of the first metal, the content of the second metal, and the content of the third metal does not exceed 100 mass%.

In the preform solder according to the first embodiment, in a case where the third metal is covered with the fourth metal containing Sn, a mixing ratio between a content of the fourth metal and the content of the third metal is a mass ratio represented by fourth metal/third metal, and may be 0.01 to 10.

In the preform solder according to the first embodiment, a ratio between the content of the first metal and the content of the second metal is a mass ratio represented by content of first metal/content of second metal, and is preferably 1 or more and 50 or less, and more preferably 2 or more and 9 or less.

In the preform solder according to the first embodiment, a ratio between the content of the second metal and the content of the third metal is a mass ratio represented by content of second metal/content of third metal, and is preferably 0.1 or more and 10 or less.

The preform solder according to the first embodiment is not limited to the above-described embodiment, and may contain a metal (hereinafter, also referred to as a "fifth metal") other than the first metal, the second metal, the third metal, and the fourth metal.

The fifth metal is not particularly limited in composition as long as the fifth metal is different in composition from the first metal, the second metal, the third metal, and the fourth metal, and is preferably, for example, a powder composed of metals Ni, Ag, Cu, In, Bi, Ge, P, Co, Ga, Zn, Sb, Pb, Au, Al, Pt, Pd, Fe, Mn, Zr, and Sn, or an alloy formed of two or more elements of these simple metals. A particle size of the fifth metal is preferably 0.1 to 1,000 µm, more preferably 1 to 100 µm, and still more preferably 5 to 50 µm.

The metal that composes the fifth metal may include one kind or two or more kinds.

The fifth metal is not limited to one kind, and metal powders having two or more different compositions may be used.

### <Preform Solder: Second Embodiment>

FIG. 2 is a schematic view showing a cross section of the preform solder in a thickness direction according to one embodiment.

The preform solder 1 shown in FIG. 2 has a metal structure including a first phase 10 that is a continuous phase, a second phase 20 dispersed in the first phase, and a third phase 30 dispersed in the first phase. R²⁰ means a diameter of the second phase 20, and R³⁰ means a diameter of the third phase 30.

The first phase 10 contains Sn. In the first phase 10, metal grain boundaries may be present. The second phase 20 is composed of an alloy containing Ni and Fe. The third phase 30 is composed of a metal of which an entire surface is formed of a metal containing Ni.

In the preform solder 1, the first phase 10 is a continuous phase and is composed of a metal containing Sn. The description of the metal containing Sn, a content thereof, and the like is the same as in <First Metal> described above.

In addition, in the first phase 10, grain boundaries may be present between metal crystals containing Sn.

An overall melting point of the metal that composes the first phase can be measured in the same manner as the melting point of the first metal. In a case where the first phase contains a plurality of kinds of metals, as the overall melting point of the metal that composes the first phase, a temperature of a peak top having the highest amount of heat absorbed per unit time is adopted among a plurality of peak tops that the plurality of types of metals that compose the first phase can have.

An overall melting point of the metal that composes the second phase is also defined in the same manner. An overall melting point of the metal forming the entire surface of the third phase is also defined in the same manner.

In a case where an entirety of the third phase has a uniform composition, an overall melting point of a metal that composes the third phase is also defined in the same manner.

In a case where the third phase has a structure composed of a core portion and a surface layer covering the core portion, an overall melting point of a metal forming the surface layer of the third phase is also defined in the same manner.

A overall melting point of a metal that composes a fourth phase is also defined in the same manner.

The description of the overall melting point of the metal that composes the first phase is the same as the description of the melting point of the first metal.

In the preform solder 1, the second phase 20 is dispersed in the first phase 10.

The second phase 20 is composed of an alloy containing Ni and Fe. The description of the alloy containing Ni and Fe, a particle size thereof, a content thereof, and the like is the same as in <Second Metal> described above.

The description of an overall melting point of the alloy that composes the second phase is the same as the description of the melting point of the second metal.

In the present specification, a particle size of a phase can be measured and calculated from a cross-sectional structure including the phase using an optical microscope, a SEM, a transmission electron microscope (TEM), or the like. The particle size of the phase can be obtained by measuring three or more diameters of the phase and calculating an average value thereof.

A particle size of the second phase can be set to a particle size of a second metal powder prepared for forming the second phase.

In the preform solder 1, the third phase 30 is dispersed in the first phase 10.

The entire surface of the third phase 30 is composed of a metal containing Ni. It is preferable that the metal forming the entire surface of the third phase 30 is Ni alone.

The description of the metal containing Ni and forming the entire surface, a particle size thereof, a content thereof, and the like is the same as in <Third Metal> described above.

The description of the overall melting point of the metal forming the entire surface of the third phase is the same as the melting point of the metal forming the entire surface of the third metal.

In a case where the entirety of the third phase has a uniform composition, an overall composition of the metal that composes the third phase is different from an overall composition of the metal that composes the first phase and an overall composition of the alloy that composes the second phase.

The description of the overall melting point of the metal that composes the third phase is the same as the description of the melting point of the third metal.

A particle size of the third phase can be set to a particle size of a third metal powder prepared for forming the third phase.

In a case where the third phase has a structure composed of a core portion and a surface layer covering the core portion, an overall composition of the metal forming the surface layer of the third phase is different from the overall composition of the metal that composes the first phase and the overall composition of the alloy that composes the second phase.

The overall melting point of the metal forming the surface layer of the third phase is the same as the melting point of the metal forming the surface layer of the third metal.

The description regarding the diameter of the core portion and the thickness of the surface layer in the third phase is the same as the diameter Rc of the core portion and the thickness Rs of the surface layer in the third metal.

The preform solder 1 may have a metal structure further including a fourth phase that covers the third phase and contains Sn.

Hereinafter, a "content of a metal that composes a phase" means a "content of an entirety of the metal that composes the phase".

In the preform solder 1, regarding a mixing ratio between the metal that composes the first phase 10, the alloy that composes the second phase 20, and the metal that composes the third phase 30, a content of the metal that composes the first phase is preferably 20 to 95 mass%, more preferably 20 to 90 mass%, still more preferably 40 to 90 mass%, particularly preferably 50 to 85 mass%, and most preferably 60 to 75 mass% with respect to a total content of the metal that composes the first phase, the metal that composes the second phase, and the metal that composes the third phase.

In the preform solder 1, regarding the mixing ratio between the metal that composes the first phase 10, the alloy that composes the second phase 20, and the metal that composes the third phase 30, from the viewpoint of achieving both the joining properties and the shear strength, a content of the alloy that composes the second phase 20 is preferably 1 to 70 mass%, more preferably 3 to 50 mass%, still more preferably 5 to 40 mass%, particularly preferably 5 to 30 mass%, and most preferably 5 to 25 mass% with respect to a total content of the metal that composes the first phase 10, the alloy that composes the second phase 20, and the metal that composes the third phase 30,.

In a case where the content of the alloy that composes the second phase 20 is equal to or more than the lower limit of the above-described preferred range, the generation of voids during the melting of Sn is easily suppressed. In addition, the heat resistance of the solder joint portion is further improved. When the content is equal to or less than the upper limit of the above-described preferred range, the generation of voids is suppressed by suppressing the generation of a porous structure due to the formation of an intermetallic compound, and the shear strength is likely to be maintained.

In the preform solder 1, regarding the mixing ratio between the metal that composes the first phase 10, the alloy that composes the second phase 20, and the metal that composes the third phase 30, a content of the alloy that composes the third phase 30 is preferably 1 to 70 mass%, more preferably 3 to 50 mass%, still more preferably 5 to 40 mass%, particularly preferably 5 to 30 mass%, and most preferably 20 to 30 mass% with respect to the total content of the metal that composes the first phase 10, the alloy that composes the second phase 20, and the metal that composes the third phase 30.

When a content of the metal that composes the third phase 30 is equal to or more than the lower limit of the above-described preferred range, the thermal conductive properties of the solder joint portion are easily improved, and when the content is equal to or less than the upper limit of the above-described preferred range, the generation of voids is suppressed.

In the preform solder according to the second embodiment, a sum of the content of the metal that composes the first phase 10, the content of the metal that composes the second phase 20, and the content of the metal that composes the third phase 30 does not exceed 100 mass%.

In a case where the preform solder according to the second embodiment has a metal structure further including a fourth phase that covers the third phase and contains Sn, a mixing ratio between a content of a metal that composes the fourth phase and the content of the metal that composes the third phase is a mass ratio represented by fourth phase/third phase, and may be 0.01 to 10.

In the preform solder according to the second embodiment, a ratio between the content of the metal that composes the first phase 10 and the content of the metal that composes the second phase 20 is a ratio represented by content of metal that composes first phase 10/content of metal that composes second phase 20, and is preferably 1 or more and 50 or less, and more preferably 2 or more and 9 or less.

In the preform solder according to the second embodiment, a ratio between the content of the metal that composes the second phase 30 to the content of the metal that composes the third phase 30 is a ratio represented by content of metal that composes second phase 20/content of metal that composes third phase 30, and is preferably 0.1 or more and 10 or less.

The preform solder according to the second embodiment is not limited to the above-described embodiment, and may further have a fifth phase dispersed in the first phase, in addition to the first phase, the second phase, the third phase, and the fourth phase. The description of the fifth phase is the same as in <Fifth Metal> described above.

The metal structure that composes the preform solder 1 includes the first phase 10, the second phase 20, and the third phase 30, while a phase including an intermetallic compound is not present between the first phase 10 and the second phase 20, or a presence ratio thereof is low.

In the preform solder 1, a content of an intermetallic compound of Sn and Ni in the metal structure is low, and is preferably 0 mass% or more and 70 mass% or less, more preferably 0 mass% or more and 30 mass% or less, and most preferably 0 mass% with respect to a total mass of the metal structure.

In the preform solder 1, when the content of the intermetallic compound of Sn and Ni in the metal structure is equal to or less than the upper limit of the above-described preferred range, the generation of voids during soldering is more easily suppressed.

Examples of a shape of the preform solder according to the first embodiment or the second embodiment described above include a square shape, a ribbon shape, a disk shape, a washer shape, a chip shape, and a wire shape.

A thermal conductivity of the preform solder according to the first embodiment or the second embodiment is preferably 27 to 100 W/(m·K), more preferably 30 to 70 W/(m·K), and even more preferably 45 to 70 W/(m·K).

The thermal conductivity of the preform solder can be measured, for example, as follows.

A produced preform solder is cut into a size of 45 mm × 15 mm to obtain a test piece. Next, the test piece is sandwiched between ceramic plates and then pressurized and heated. In a pressurization heating profile, heating is performed at a temperature rising rate of 0.25 °C/sec, followed by holding at 250°C for 120 seconds, and then cooling at a cooling rate of 2 °C/sec. A pressure is set to 0.5 MPa. An atmosphere during the heating is set to N₂ (95%) + H₂ (5%).

Next, an electrical resistivity is measured by a four-probe method using, for example, Loresta-GP MCP-T610 (manufactured by Nittoseiko Analytech Co., Ltd.) as a measuring device. Two test pieces of the preform solder are produced, and the measurement is performed by bringing probes into contact with three locations near a center portion of each test piece away from an end thereof. An average value of these six measured values is taken as the electrical resistivity.

A known manufacturing method can be used for manufacturing the preform solder according to the first embodiment or the second embodiment, and for example, a melting method or a rolling method can be applied. Among these, in the manufacturing of the preform solder according to the present embodiment, the rolling method is preferably applied because the generation of an intermetallic compound of Sn and Ni is easily suppressed, the generation of large voids can be suppressed, the amount of generated voids is small, and the generation of voids is less likely to occur.

The preform solder according to the present embodiment described above contains the third metal of which the entire surface is formed of the metal containing Ni, in addition to the first metal containing Sn and the second metal composed of the alloy containing Ni and Fe. Since the preform solder according to the present embodiment contains the second metal, the generation of a porous structure due to the formation of an intermetallic compound is suppressed, and particularly, the generation of voids during soldering under high-temperature conditions (250°C or higher) is suppressed, so that the shear strength is likely to be maintained.

The preform solder according to the present embodiment contains the third metal, and thus it is possible to improve the thermal conductive properties of the solder joint portion. The reason why such an effect is obtained is not clear, but is presumed as follows.

An intermetallic compound of Cu and Sn and an intermetallic compound of Ni and Sn have a lower thermal conductivity than Cu, Ni, and the like. For example, the thermal conductivities of Cu and Ni are 401 W/m·K and 88.5 W/m·K, respectively, and the thermal conductivities of the intermetallic compounds Cu₆Sn₅ (Cu₃Sn) and Ni₃Sn₄ are 34 W/m·K and 20 W/m·K, respectively.

The entire surface of the third metal is formed of the metal containing Ni, and Ni has low reactivity with Sn, so that Ni₃Sn₄ is not easily generated. That is, since the surface of the third metal is less likely to react with Sn in the preform solder to form an intermetallic compound, it is possible to improve the thermal conductive properties of the solder joint portion. Even in a case where the third metal is covered with a metal layer containing Sn, the effect of suppressing the formation of an intermetallic compound by Ni of the present application is exhibited as long as the metal layer containing Sn is immediately melted during the joining of the preform solder.

On the other hand, in a case where a metal powder composed of Cu is used instead of the third metal of which the entire surface is formed of the metal containing Ni, since Cu has high reactivity with Sn, an intermetallic compound Cu₆Sn₅ (Cu₃Sn) is easily generated. As a result, in a case where the metal powder composed of Cu is used, the thermal conductive properties of the solder joint portion decrease compared to a case where the third metal is used.

### <Method of Manufacturing Preform Solder>

An embodiment of a method of manufacturing a preform solder according to the present invention is a manufacturing method including a mixing step of mixing a first metal powder containing Sn, a second metal powder composed of an alloy containing Ni and Fe, and a third metal powder of which an entire surface is formed of a metal containing Ni to prepare a metal powder mixture, and a rolling step of rolling the metal powder mixture to produce a preform solder.

### First metal powder:

A metal that composes the first metal powder used in the present embodiment is a metal containing Sn. The description of the metal containing Sn is the same as in

### <First Metal> described above.

A melting point of the first metal powder is preferably 300°C or lower, may be 250°C or lower, or may be 116°C to 200°C.

When the melting point of the first metal powder is equal to or lower than the upper limit of the above-described preferred range, wettability of solder is easily ensured.

A content of Sn in the first metal powder is preferably 20 mass% or more and 100 mass% or less with respect to a total mass of the first metal powder. In order to sufficiently exhibit the characteristics of Sn, the content of Sn in the first metal powder is preferably 90 mass% or more, more preferably 95 mass% or more, and still more preferably 100 mass% with respect to the total mass of the first metal powder.

A particle size of the first metal powder preferably is 0.1 to 1,000 µm, and more preferably 1 to 100 µm.

When the particle size of the first metal powder is equal to or greater than the lower limit of the above-described preferred range, wettability is easily secured, and when the particle size of the first metal powder is equal to or smaller than the upper limit of the above-described preferred range, an intermetallic compound is more easily formed.

### Second metal powder:

A metal that composes the second metal powder used in the present embodiment is an alloy containing Ni and Fe, and has a melting point higher than the melting point of the first metal powder. The description of the alloy containing Ni and Fe is the same as in <Second Metal> described above.

A melting point of the alloy in the second metal powder is preferably higher than 300°C, more preferably 500°C or higher, and still more preferably 600°C to 1,600°C.

When the melting point of the second metal powder is higher than the lower limit of the above-described preferred range, the shear strength of the solder joint is likely to be increased even in a high-temperature operating environment.

A content of Ni in the second metal powder is preferably 80 mass% or more and 99 mass% or less, and more preferably 85 mass% or more and 95 mass% or less with respect to a total mass of the second metal powder.

A content of Fe in the second metal powder is preferably 1 mass% or more and 20 mass% or less, and more preferably 5 mass% or more and 15 mass% or less with respect to the total mass of the second metal powder.

When the contents of Ni and Fe in the second metal powder are in the above-described preferred ranges, an intermetallic compound is formed at an earlier stage, and the generation of voids can be suppressed.

A particle size of the second metal powder is preferably 0.1 to 1,000 µm, more preferably 1 to 100 µm, and still more preferably 5 to 50 µm.

When the particle size of the second metal powder is equal to or greater than the lower limit of the above-described preferred range, wettability is easily ensured, and when the particle size of the second metal powder is equal to or smaller than the upper limit of the above-described preferred range, an intermetallic compound is more easily formed.

### Third metal powder:

The entire surface of the third metal powder used in the present embodiment is formed of a metal containing Ni.

The metal that composes the third metal powder is the same as in <Third Metal> described above.

It is preferable that the entire surface of the third metal powder is formed of Ni alone.

A particle size of the third metal is preferably 0.1 to 1,000 µm, more preferably 1 to 300 µm, and even more preferably 10 to 200 µm.

When the particle size of the third metal is equal to or greater than the lower limit of the above-described preferred range, the thermal conductive properties of the solder joint portion are easily increased.

### [Mixing Step]

In the mixing step, the first metal powder, the second metal powder, and the third metal powder are mixed to prepare a metal powder mixture.

Regarding a formulation ratio in a case of mixing the two, the first metal powder, the second metal powder, and the third metal powder are mixed preferably in a ratio of 20 to 95 parts by mass of the first metal powder, 1 to 70 parts by mass of the second metal powder, and 1 to 70 parts by mass of the third metal powder, more preferably in a ratio of 20 to 90 parts by mass of the first metal powder, 3 to 50 parts by mass of the second metal powder, and 3 to 50 parts by mass of the third metal powder, still more preferably in a ratio of 40 to 90 parts by mass of the first metal powder, 5 to 40 parts by mass of the second metal powder, and 5 to 40 parts by mass of the third metal powder, particularly preferably in a ratio of 50 to 85 parts by mass of the first metal powder, 5 to 30 parts by mass of the second metal powder, and 5 to 30 parts by mass of the third metal powder, and particularly preferably in a ratio of 60 to 75 parts by mass of the first metal powder, 5 to 25 parts by mass of the second metal powder, and 20 to 30 parts by mass of the third metal powder.

When the formulation ratio in a case of mixing the two is set to the above-described preferred range, the thermal conductive properties of the solder joint portion are easily increased. In addition, the generation of voids is suppressed, the shear strength is likely to be maintained, and the heat resistance of the solder joint portion is further improved.

The mixing step may further include a step of covering the third metal powder with the fourth metal. The covering step may be, for example, a step of plating the third metal powder with the fourth metal. The mixing step may include a step of mixing the third metal powder and the fourth metal containing Sn in advance before the covering step.

The description of the fourth metal is the same as in <Fourth Metal> described above in the first embodiment of the preform solder.

In the step of covering the third metal powder with the fourth metal, a mass ratio between the fourth metal and the third metal powder is a mass ratio represented by fourth metal/third metal powder, and may be 0.01 to 10.

In the metal powder mixture, a formulation ratio between the first metal powder and the second metal powder is a ratio represented by mass of first metal powder/mass of second metal powder, and is preferably 1 or more and 50 or less, and more preferably 2 or more and 9 or less.

In the metal powder mixture, a formulation ratio between the second metal powder and the third metal powder is a ratio represented by mass of second metal powder/mass of third metal powder, and is preferably 0.1 or more and 10 or less.

### [Rolling step]

In the rolling step, the metal powder mixture prepared in the mixing step is rolled and molded into a desired shape to produce a preform solder.

A known rolling method can be used as a method of rolling the metal powder mixture, and for example, the metal powder mixture may be processed using a twin-roll type rolling mill or the like. The number of rolling times and the rolling load applied to the metal powder mixture may be appropriately set according to the desired shape and thickness of the target preform solder.

As described above, the method of manufacturing a preform solder according to the present embodiment includes the mixing step of mixing the first metal powder, the second metal powder, and the third metal powder to prepare a metal powder mixture, and the rolling step.

In the mixing step, since the third metal powder of which the entire surface is formed of a metal including Ni is adopted, it is possible to improve the thermal conductive properties of the solder joint.

In addition, since an alloy containing Ni and Fe is adopted as the second metal powder and the metal powder mixture is rolled and processed, the generation of an intermetallic compound of Sn and Ni in the metal structure is suppressed, and a preform solder in which the generation of voids during soldering is further suppressed can be easily manufactured.

The method of manufacturing a preform solder according to the present embodiment is useful as a method of manufacturing the preform solder according to the first embodiment or the second embodiment described above.

The method of manufacturing a preform solder according to the present invention is not limited to the above-described embodiment, and may be an embodiment further including other steps in addition to the above-described mixing step and rolling step.

In addition, the method of manufacturing a preform solder according to the embodiment of the present invention is not limited to the above-described embodiment, and a metal powder (hereinafter, also referred to as a "fifth metal powder") other than the first metal powder, the second metal powder, and the third metal powder may be used. A metal that composes the fifth metal powder is the same as in <Fifth Metal> described above.

### (Method of Manufacturing Solder Joint)

One embodiment of a method of manufacturing a solder joint according to the embodiment of the present invention is a manufacturing method of forming a joined portion between objects using the preform solder manufactured by (Method of Manufacturing Preform Solder) described above.

The objects to be joined by applying such a manufacturing method is not particularly limited. For example, by applying such a manufacturing method, the semiconductor element and a substrate can be joined to each other.

Examples of the semiconductor element include a silicon carbide (SiC) chip and a Si chip.

Examples of the substrate include a circuit board, a ceramic substrate, a metal substrate, and a direct copper bonding (DCB) substrate. An electrode on the substrate may be, for example, a Cu electrode or an electrode on which any of Sn plating, Ni plating, Ni-Au plating, Ni-Pd plating, or Ni-Pd-Au plating is performed on a Cu electrode.

In addition, in a case of the joining, a flux may be applied in advance to one or both surfaces of the preform solder to be joined, a joining surface of the semiconductor element, or a joining surface of the substrate.

A temperature in a case of joining the semiconductor element to the substrate is, for example, preferably 120°C or higher and 400°C or lower, may be 200°C or higher and 400°C or lower, or may be 250°C or higher and 400°C or lower, and the method of manufacturing a solder joint of the present embodiment is useful for joining under high-temperature conditions (250°C or higher).

An atmosphere in a case of joining the objects may be an air atmosphere, an inert atmosphere such as a nitrogen atmosphere, or a reducing atmosphere.

In a case of the nitrogen atmosphere, a pressure applied during the joining is preferably adjusted to 0.1 MPa or more and 10 MPa or less. By joining the objects in such a nitrogen atmosphere, the effect of suppressing the generation of voids is enhanced.

In a case of the reducing atmosphere, the objects can be joined without pressurization.

As described above, according to the method of manufacturing a solder joint of the present embodiment, after reflow, the third metal in the solder joint is suppressed from forming an intermetallic compound, and thus thermal conductive properties can be improved. In addition, during the reflow, the alloy containing Ni and Fe and the first metal containing Sn react with each other to generate an intermetallic compound, so that the heat resistance of the solder joint portion is further improved. In addition, since the generation of voids in the solder joint portion is further suppressed, it is possible to manufacture a solder joint having an increased shear strength.

The method of manufacturing a solder joint according to the present embodiment is particularly useful for applications in which a high-temperature solder that does not melt during operation under high-temperature conditions, such as a power semiconductor element, is required.

### Examples

Hereinafter, the present invention will be described with reference to Examples, but the present invention is not limited to Examples.

In the present example, the following metal powder was used.

The particle size of the metal powder was measured in terms of average particle size on a volume basis using a laser diffraction/scattering type particle size distribution analyzer (MT3300EXII) manufactured by MicrotracBEL Corp.

The melting point of the metal powder was determined by differential scanning calorimetry (DSC). The first metal powder was measured with DSC7020 manufactured by Hitachi High-Tech Science Corporation, and the second metal powder and the third metal powder were measured with DSC 404-F3 Pegasus manufactured by NETZSCH.

### First metal powder:

Metal powder of Sn 100 mass% (Sn 100 mass% powder), average particle size: 65 µm (maximum particle size: 75 µm), melting point: 232°C

### Second metal powder:

Metal powder (Ni-10 mass%Fe powder) composed of an alloy of Ni 90 mass% and Fe 10 mass%, average particle size: 12.8 µm

### Third metal powder:

### Third metal powder (1)

Metal powder of Ni 100 mass% (Ni 100 mass% powder) average particle size: 50.7 µm

### Third metal powder (2)

### Ni plated-Cu 100 mass% core balls

As the core portions of the third metal powder (2), Cu 100 mass% core balls were used. The average particle size of the core portions (that is, the diameter Rc of the core portions) was 11.0 µm.

The surface layer of the third metal powder (2) was Ni 100 mass% plating. The plating thickness (that is, the thickness Rs of the surface layer) was 1 to 3 µm.

### Third metal powder (3)

### Ni plated-Cu 100 mass% core balls

As the core portions of the third metal powder (3), Cu 100 mass% core balls were used. The average particle size of the core portions (that is, the diameter Rc of the core portions) was 55.3 µm.

The surface layer of the third metal powder (3) was Ni 100 mass% plating. The plating thickness (that is, the thickness Rs of the surface layer) was 1 to 3 µm.

### Third metal powder (4)

### Ni plated-Cu 100 mass% core balls

As the core portions of the third metal powder (4), Cu 100 mass% core balls were used. The average particle size of the core portions (that is, the diameter Rc of the core portions) was 104.3 µm.

The surface layer of the third metal powder (4) was with Ni 100 mass% plating. The plating thickness (that is, the thickness Rs of the surface layer) was 1 to 3 µm.

The plated core balls of the third metal powder (2) to (4) are obtained by covering the entire surface of the Cu 100 mass% core balls with Ni 100 mass% plating. All of the Ni 100 mass% plating was formed by electroplating. The melting point of the Ni 100 mass% plating was 1,455°C.

### Fifth metal powder:

Metal powder of Cu 100 mass% (Cu 100 mass% powder) average particle size: 11.0 µm

### <Manufacturing of Preform Solder>

The first metal powder, the second metal powder, the third metal powder, and the fifth metal powder were each produced. A preform solder of each example was produced using these metal powders.

### (Example 1)

### Mixing step:

75 parts by mass of Sn 100 mass% powder having an average particle size of 65 µm as the first metal powder, 20 parts by mass of Ni-10 mass%Fe powder having an average particle size of 12.8 µm as the second metal powder, and 5 parts by mass of the third metal powder (2) as the third metal powder were stirred to prepare a metal powder mixture.

### Rolling step:

Next, the prepared metal powder mixture was introduced into a hopper of a twin-roll rolling machine, the surface temperature of the rolling roll was set to 100°C, and the rolling load was set to about 25 kN, thereby obtaining a strip-shaped rolled material. Thereafter, the rolling was repeated to obtain a strip-shaped preform solder having a thickness of 100 µm.

### (Examples 2 to 4)

A strip-shaped preform solder having a thickness of 100 µm was obtained by sequentially performing the mixing step and the rolling step in the same manner as in Example 1, except that the third metal powder (1) was used as the third metal powder and the first metal powder, the second metal powder, and the third metal powder (1) were used in a predetermined mixing ratio as shown in Table 1.

### (Examples 5 and 6)

A strip-shaped preform solder having a thickness of 100 µm was obtained by sequentially performing the mixing step and the rolling step in the same manner as in Example 1, except that the third metal powder (3) was used as the third metal powder, and the first metal powder, the second metal powder, and the third metal powder (3) were used in a predetermined mixing ratio as shown in Table 1.

### (Examples 7 and 8)

A strip-shaped preform solder having a thickness of 100 µm was obtained by sequentially performing the mixing step and the rolling step in the same manner as in Example 1, except that the third metal powder (4) was used as the third metal powder, and the first metal powder, the second metal powder, and the third metal powder (4) were used in a predetermined mixing ratio as shown in Table 1.

### (Comparative Examples 1 and 2)

A strip-shaped preform solder having a thickness of 100 µm was obtained by sequentially performing the mixing step and the rolling step in the same manner as in Example 1, except that the third metal powder was not used and the first metal powder and the second metal powder were used in a predetermined mixing ratio as shown in Table 1.

### (Comparative Example 3)

A strip-shaped preform solder having a thickness of 100 µm was obtained by sequentially performing the mixing step and the rolling step in the same manner as in Example 1, except that Cu 100 mass% powder having an average particle size of 11.0 µm was used as the fifth metal powder instead of the third metal powder, and the first metal powder, the second metal powder, and the fifth metal powder were used in a predetermined mixing ratio as shown in Table 1.

### <Evaluation>

The electrical resistivity of the produced preform solder was measured and the thermal conductivity was calculated as follows.

### [Measurement of Electrical Resistivity]

The preform solder of each example was cut into a size of 45 mm × 15 mm to obtain a test piece of each example. Each test piece was sandwiched between ceramic plates and was pressurized and heated. In the pressurization heating profile, the heating was performed at a temperature rising rate of 0.25 °C/sec, followed by holding at 250°C for 120 seconds, and then cooling at a cooling rate of 2 °C/sec. The pressure was set to 0.5 MPa. The atmosphere during the heating was set to N₂ (95%) + H₂ (5%). The electrical resistivity was measured by a four-probe method using Loresta-GP MCP-T610 (manufactured by Nittoseiko Analytech Co., Ltd.) as a measuring device. Two test pieces of each example were produced, and the measurement was performed by bringing probes into contact with three locations near a center portion of each test piece away from an end thereof.

The average value of these six measured values was taken as the electrical resistivity.

### [Calculation of thermal conductivity]

Thermal conductivity was calculated based on the electrical resistivity according to the Wiedemann-Franz law.

### According to the Wiedemann-Franz law, κ/σ = LT is established.

Here, κ [W/(m·K)] is the thermal conductivity, σ [Ω⁻¹m⁻¹] is the electrical conductivity, and L [WΩ/K²] is the Lorentz number (2.44 × 10⁻⁸). When the electrical resistivity obtained by the measurement is denoted by ρ, σ = 1/ρ*.*

The temperature T was set to 293 K, and κ was calculated from κ = LT/ρ. The calculated thermal conductivity is shown in Table 1.

**[Table 1]**

| Metal powder | | | Example 1 | Example 2 | Example 3 | Example 4 | Example 5 | Example 6 | Example 7 | Example 8 | Comparative Example 1 | Comparative Example 2 | Comparative Example 3 |
|---|---|---|---|---|---|---|---|---|---|---|---|---|---|
| First metal powder | Sn 100 mass% powder | | 75 | 75 | 72 | 64 | 76 | 72 | 66 | 61.6 | 80 | 75 | 75 |
| | Average particle size: 65 µm | | | | | | | | | | | | |
| Second metal powder | Ni-10 mass% Fe powder | | 20 | 20 | 18 | 16 | 19 | 18 | 9 | 8.4 | 20 | 25 | 20 |
| | Average particle size:12.8 µm | | | | | | | | | | | | |
| Third metal powder (1) | Ni 100 mass% powder | | | 5 | 10 | 20 | | | | | | | |
| | Average particle size: 50.7 µm | | | | | | | | | | | | |
| Third metal powder (2) | Core portion Cu 100 mass% powder | Surface layer Ni 100% Thickness Rs: 1 to 3 µm | 5 | | | | | | | | | | |
| | Diameter Re: 11.0 µm | | | | | | | | | | | | |
| Third metal powder (3) | Core portion Cu 100 mass% powder | Surface layer Ni 100% Thickness Rs: 1 to 3 µm | | | | | 5 | 10 | | | | | |
| | Diameter Rc: 55.3 µm | | | | | | | | | | | | |
| Third metal powder (4) | Core portion Cu 100 mass% powder | Surface layer Ni 100% Thickness Rs: 1 to 3 µm | | | | | | | 25 | 30 | | | |
| | Diameter Re: 104.3 µm | | | | | | | | | | | | |
| Fifth metal powder | Cu 100 mass% powder | | | | | | | | | | | | 5 |
| | Average particle size:11.0 µm | | | | | | | | | | | | |
| Thermal conductivity [W/(m·K)] | | | 30.40 | 31.98 | 37.27 | 37.04 | 33.96 | 35.23 | 57.13 | 57.77 | 25.66 | 20.20 | 22.25 |

From the results shown in Table 1, it can be confirmed that the preform solders of Examples 1 to 8 have a higher thermal conductivity than the preform solders of Comparative Examples 1 to 3.

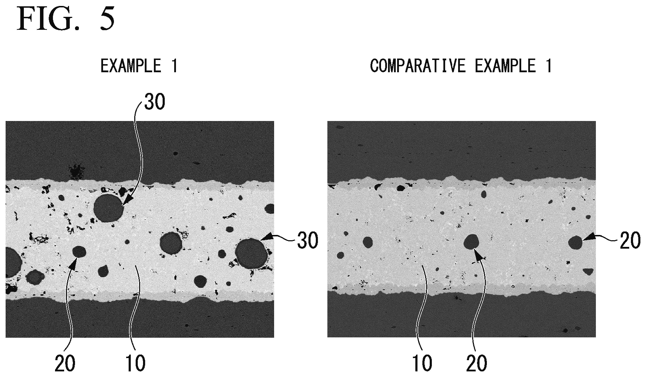

FIG. 5 shows an SEM image (magnification: 300x) showing a cross section of the preform solder of Example 1 and Comparative Example 1 in the thickness direction.

It was confirmed that the preform solder of Example 1 has a metal structure including a first phase that is a continuous phase, a second phase dispersed in the first phase, and a third phase dispersed in the first phase.

### REFERENCE SIGNS LIST

1 Preform solder
10 First phase
20 Second phase
30 Third phase
30A, 30B Third metal
301 Core portion
302 Surface layer
303 Intermediate layer

## Claims

1. A preform solder comprising:
a first metal containing Sn;
a second metal composed of an alloy containing Ni and Fe; and
a third metal of which an entire surface is formed of a metal containing Ni,
wherein a melting point of the first metal is 300°C or lower,
a melting point of the alloy in the second metal is higher than 300°C,
a melting point of the metal containing Ni and forming the entire surface of the third metal is higher than 300°C,
a content of Sn in the first metal is 20 mass% or more and 100 mass% or less with respect to a total mass of the first metal,
a content of Ni in the second metal is 80 mass% or more and 99 mass% or less with respect to a total mass of the second metal,
a content of Fe in the second metal is 1 mass% or more and 20 mass% or less with respect to the total mass of the second metal,
a content of Ni in the metal containing Ni and forming the entire surface of the third metal is 50 mass% or more and 100 mass% or less with respect to a total mass of the metal forming the entire surface of the third metal,
a particle size of the second metal is 0.1 to 1,000 µm,
a particle size of the third metal is 0.1 to 1,000 µm,
a content of the second metal is 1 to 70 mass% with respect to a total content of the first metal, the second metal, and the third metal, and
a content of the third metal is 1 to 70 mass% with respect to the total content of the first metal, the second metal, and the third metal.

2. The preform solder according to Claim 1,
wherein a composition of the third metal is different from a composition of the first metal and a composition of the second metal,
the third metal consists of Ni or contains Ni and a metal other than Ni,
a content of Ni in the third metal is 50 mass% or more with respect to a total mass of the third metal,
a melting point of the third metal is higher than 300°C,
a content of the first metal is 20 to 90 mass% with respect to the total content of the first metal, the second metal, and the third metal, and
the content of the third metal is 5 to 30 mass% with respect to the total content of the first metal, the second metal, and the third metal.

3. The preform solder according to Claim 1,
wherein the third metal has a structure composed of a core portion and a surface layer covering the core portion,
a composition of a metal forming the surface layer of the third metal is different from a composition of the first metal and a composition of the second metal,
the metal forming the surface layer of the third metal consists of Ni or contains Ni and a metal other than Ni,
a content of Ni in the metal forming the surface layer of the third metal is 50 mass% or more with respect to a total mass of the metal forming the surface layer of the third metal,
a melting point of the metal forming the surface layer of the third metal is higher than 300°C,
a content of the first metal is 20 to 90 mass% with respect to the total content of the first metal, the second metal, and the third metal, and
the content of the third metal is 5 to 30 mass% with respect to the total content of the first metal, the second metal, and the third metal.

4. The preform solder according to Claim 3, further comprising:
an intermediate layer between the core portion and the surface layer covering the core portion.

5. The preform solder according to any one of Claims 1 to 4, further comprising:
a fourth metal containing Sn and covering the third metal.

6. A preform solder having a metal structure comprising a first phase that is a continuous phase, a second phase dispersed in the first phase, and a third phase dispersed in the first phase,
wherein the first phase is composed of a metal containing Sn,
the second phase is composed of an alloy containing Ni and Fe,
the third phase has an entire surface composed of a metal containing Ni,
an overall melting point of the metal that composes the first phase is 300°C or lower,
an overall melting point of the alloy that composes the second phase is higher than 300°C,
an overall melting point of the metal that contains Ni and composes the entire surface of the third phase is higher than 300°C,
a content of Sn in the metal that composes the first phase is 20 mass% or more and 100 mass% or less with respect to a total mass of the metal,
a content of Ni in the alloy that composes the second phase is 80 mass% or more and 99 mass% or less with respect to a total mass of the alloy,
a content of Fe in the alloy that composes the second phase is 1 mass% or more and 20 mass% or less with respect to the total mass of the alloy,
a content of Ni in the metal containing Ni and forming the entire surface of the third phase is 50 mass% or more and 100 mass% or less with respect to a total mass of the metal forming the entire surface of the third phase,
a particle size of the second phase is 0.1 to 1,000 µm,
a particle size of the third phase is 0.1 to 1,000 µm,
a content of an entirety of the alloy that composes the second phase is 1 to 70 mass% with respect to a total content of an entirety of the metal that composes the first phase, the entirety of the alloy that composes the second phase, and an entirety of the metal that composes the third phase, and
a content of the entirety of the metal that composes the third phase is 1 to 70 mass% with respect to the total content of the entirety of the metal that composes the first phase, the entirety of the alloy that composes the second phase, and the entirety of the metal that composes the third phase.

7. The preform solder according to Claim 6,
wherein an overall composition of the metal that composes the third phase is different from an overall composition of the metal that composes the first phase and an overall composition of the alloy that composes the second phase,
the third phase consists of Ni or contains Ni and a metal other than Ni,
the content of Ni in the metal that composes the third phase is 50 mass% or more with respect to the total mass of the metal that composes the third phase,
an overall melting point of the metal that composes the third phase is higher than 300°C,
a content of the entirety of the metal that composes the first phase is 20 to 90 mass% with respect to the total content of the entirety of the metal that composes the first phase, the entirety of the alloy that composes the second phase, and the entirety of the metal that composes the third phase, and
the content of the entirety of the metal that composes the third phase is 5 to 30 mass% with respect to the total content of the entirety of the metal that composes the first phase, the entirety of the alloy that composes the second phase, and the entirety of the metal that composes the third phase.

8. The preform solder according to Claim 6,
wherein the third phase has a structure composed of a core portion and a surface layer covering the core portion,
an overall composition of a metal forming the surface layer of the third phase is different from an overall composition of the metal that composes the first phase and an overall composition of the alloy that composes the second phase,
the surface layer of the third phase consists of Ni or contains Ni and a metal other than Ni,
a content of Ni in the surface layer of the third phase is 50 mass% or more with respect to a total mass of the surface layer of the third phase,
an overall melting point of the metal forming the surface layer of the third phase is higher than 300°C,
a content of the entirety of the metal that composes the first phase is 20 to 90 mass% with respect to the total content of the entirety of the metal that composes the first phase, the entirety of the alloy that composes the second phase, and the entirety of the metal that composes the third phase, and
the content of the entirety of the metal that composes the third phase is 5 to 30 mass% with respect to the total content of the entirety of the metal that composes the first phase, the entirety of the alloy that composes the second phase, and the entirety of the metal that composes the third phase.

9. The preform solder according to Claim 8, further comprising:
an intermediate layer between the core portion and the surface layer covering the core portion.

10. The preform solder according to any one of Claims 6 to 9, further comprising:
a fourth phase containing Sn and covering the third phase.

11. A method of manufacturing a preform solder comprising:
a mixing step of mixing a first metal powder containing Sn, a second metal powder composed of an alloy containing Ni and Fe, and a third metal powder of which an entire surface is formed of a metal containing Ni to prepare a metal powder mixture; and
a rolling step of rolling the metal powder mixture to produce a preform solder,
wherein a melting point of the first metal powder is 300°C or lower,
a melting point of the alloy in the second metal powder is higher than 300°C,
a melting point of the metal containing Ni and forming the entire surface of the third metal powder is higher than 300°C,
a content of Sn in the first metal powder is 20 mass% or more and 100 mass% or less with respect to a total mass of the first metal powder,
a content of Ni in the second metal powder is 80 mass% or more and 99 mass% or less with respect to a total mass of the second metal powder,
a content of Fe in the second metal powder is 1 mass% or more and 20 mass% or less with respect to the total mass of the second metal powder,
a content of Ni in the metal containing Ni and forming the entire surface of the third metal powder is 50 mass% or more and 100 mass% or less with respect to a total mass of the metal forming the entire surface of the third metal,
a particle size of the first metal powder is 0.1 to 1,000 µm,
a particle size of the second metal powder is 0.1 to 1,000 µm,
a particle size of the third metal powder is 0.1 to 1,000 µm, and
in the mixing step, the first metal powder, the second metal powder, and the third metal powder are mixed in a ratio of 20 to 95 parts by mass of the first metal powder, 1 to 70 parts by mass of the second metal powder, and 1 to 70 parts by mass of the third metal powder.

12. The method of manufacturing a preform solder according to Claim 11,
wherein a composition of the third metal powder is different from a composition of the first metal powder and a composition of the second metal powder,
the third metal powder consists of Ni or contains Ni and a metal other than Ni,
a content of Ni in the third metal powder is 50 mass% or more with respect to a total mass of the third metal powder,
a melting point of the third metal is higher than 300°C, and
in the mixing step, the first metal powder, the second metal powder, and the third metal powder are mixed in a ratio of 20 to 90 parts by mass of the first metal powder, 1 to 70 parts by mass of the second metal powder, and 5 to 30 parts by mass of the third metal powder.

13. The method of manufacturing a preform solder according to Claim 11,
wherein the third metal powder has a structure composed of a core portion and a surface layer covering the core portion,
a composition of a metal forming the surface layer of the third metal powder is different from a composition of the first metal powder and a composition of the second metal powder,
the metal forming the surface layer of the third metal powder consists of Ni or contains Ni and a metal other than Ni,
a content of Ni in the metal forming the surface layer of the third metal powder is 50 mass% or more with respect to a total mass of the metal forming the surface layer of the third metal powder,
a melting point of the metal forming the surface layer of the third metal powder is higher than 300°C, and
in the mixing step, the first metal powder, the second metal powder, and the third metal powder are mixed in a ratio of 20 to 90 parts by mass of the first metal powder, 1 to 70 parts by mass of the second metal powder, and 5 to 30 parts by mass of the third metal powder.

14. The method of manufacturing a preform solder according to Claim 13,
wherein the third metal powder has an intermediate layer between the core portion and the surface layer covering the core portion.

15. The method of manufacturing a preform solder according to any one of Claims 11 to 14, further comprising:
covering the third metal powder with a fourth metal.

16. A method of manufacturing a solder joint, comprising:
forming a joint portion between objects using the preform solder manufactured by the method of manufacturing a preform solder according to any one of Claims 11 to 14.

17. A method of manufacturing a solder joint, comprising:
forming a joint portion between objects using the preform solder manufactured by the method of manufacturing a preform solder according to Claim 15.
